# EUROPÄISCHE PATENTSCHRIFT

(11) **EP 2 289 725 B1**
(45) Veröffentlichungstag und Bekanntmachung des Hinweises auf die Patenterteilung: **12.10.2016**
(21) Anmeldenummer: 10008078.7
(22) Anmeldetag: 03.08.2010
(51) Int. Cl.: B60J 7/20

(54) **Verdeckkastendeckel für einen Personenkraftwagen**
Cover box lid for a passenger vehicle
Couvercle de coffre de capote pour un véhicule de transport de passagers

(30) Priorität: 25.08.2009 DE 102009038808
(43) Veröffentlichungstag der Anmeldung: 02.03.2011
(73) Patentinhaber: AUDI AG, 85045 Ingolstadt (DE)
(72) Erfinder: Mangold, Artur, 72172 Sulz (DE); Bruder, Gernot, 76131 Karlsruhe (DE); Vogt, Dirk, 70619 Stuttgart (DE)
(74) Vertreter: Engelhardt, Harald

(56) Entgegenhaltungen:
- EP-A2- 0 927 654
- EP-A2- 1 676 737
- WO-A1-03/104006
- WO-A1-2004/078505
- DE-A1- 10 156 011
- DE-A1-102005 033 599
- US-A- 5 743 587

## Beschreibung

Die Erfindung bezieht sich auf einen Verdeckkastendeckel für einen Personenkraftwagen mit einem Faltverdeck nach dem Oberbegriff des Patentanspruchs 1.

Es ist ein Faltverdeck für einen Aufbau eines Kraftfahrzeugs bekannt, DE 103 09 366 B4, das in einer Offenstellung in einem Heckraum eines Aufbaus abgelegt ist. Der Heckraum ist mittels eines Deckelteils verschließbar. Das Deckelteil ist unter Vermittlung von an Fahrzeuglängsseiten angelenkten Hilfslenkern abgestützt, die unter Vermittlung weiterer Lenker mit dem Deckelteil verbunden sind. Diese Lenker sind in der Weise ausgelegt, dass das Deckelteil zum Verbringen des Faltverdecks in den Heckraum vorne und zum Be- und Entladen des Heckraums mit bzw. von Gegenständen hinten anhebbar ist.

Die DE 195 32 568 C1 gibt eine Antriebsvorrichtung für ein Verdeck und/oder einen Verdeckkastendeckel eines Kraftfahrzeugs wieder. Der Verdeckkastendeckel erstreckt sich oberhalb eines Verdeckkastens, in den das Verdeck in seiner Offenstellung bewegbar ist. Eine Antriebsvorrichtung für Verdeck und/oder Verdeckkastendeckel umfasst einen elektrischen Antriebsmotor, der unter Zwischenschaltung einer biegsamen Welle mit Getriebeeinheiten zusammenwirkt. Jede Getriebeeinheit ist über ein Verstellgestänge mit dem Verdeck und/oder dem Verdeckkastendeckel verbunden.

Stand der Tecknik Dokument WO 2004/078505 offenbart der Oberbegriff des Anspruchs 1.

Aufgabe der Erfindung ist es, einen zwischen einer Abdeckstellung und einer Aufnahmestellung bewegbaren Verdeckkastendeckel mit einem mehrere Lenker aufweisenden Lenkersystem auszustatten, das sich durch Einfachheit und gute Funktion auszeichnet. Dabei sollten aber auch Vorkehrungen getroffen werden, die den Verdeckkastendeckel gezielt und lagerichtig in die Abdeckstellung verbringen und dort in Lage halten.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Lenkersystem mit Hauptlenker, Verbindungslenker, Antriebslenker und Steuerlenkern sowie die Anordnung und Ausbildung von letzteren dem Lenkersystem musterhafte kinematische Voraussetzungen zur Bewegung des Verdeckkastendeckels zwischen Abdeckstellung und Aufnahmestellung bietet. Dabei lassen sich die Lenker mit vertretbarem Aufwand herstellen und baulich ohne weiteres in den Aufbau des Personenkraftwagens integrieren. Der Antriebslenker ist auf vorbildliche Weise mit einer Betätigungseinrichtung verbunden, die z.B. pneumatischer, hydraulischer oder elektrischer Bauart sein kann. Die Schwenklager zwischen den verschiedenen Lenkern sind bewährte und deshalb auch kostengünstige Bauteile. In der Abdeckstellung des Verdeckkastendeckels ist zwischen besagtem Verdeckkastendeckel und dem Aufbau eine Fixierungseinrichtung wirksam, die besagten Verdeckkastendeckel mit leicht realisierbaren Mitteln vor allem in Fahrzeughöhenrichtung und in Fahrzeugquerrichtung ausrichtet bzw. festlegt.

In der Zeichnung ist ein Ausführungsbeispiel der Erfindung dargestellt, das nachstehend näher beschrieben wird.

### Es zeigen

Fig. 1 eine Schrägansicht von hinten rechts oben auf einen Personenkraftwagen mit einem Faltverdeck in einer Schließstellung und einem Verdeckkastendeckel in einer Abdeckstellung,
Fig. 2 eine Teilseitenansicht der Fig. 1 mit dem Verdeckkastendeckel in der Abdeckstellung in größerem Maßstab,
Fig. 3 eine Ansicht entsprechend Fig. 2 in kleinerem Maßstab, jedoch den Verdeckkastendeckel in einer teilweise geöffneten Zwischenstellung,
Fig. 4 eine Ansicht entsprechend Fig. 3, jedoch den Verdeckkastendeckel in einer Aufnahmestellung.

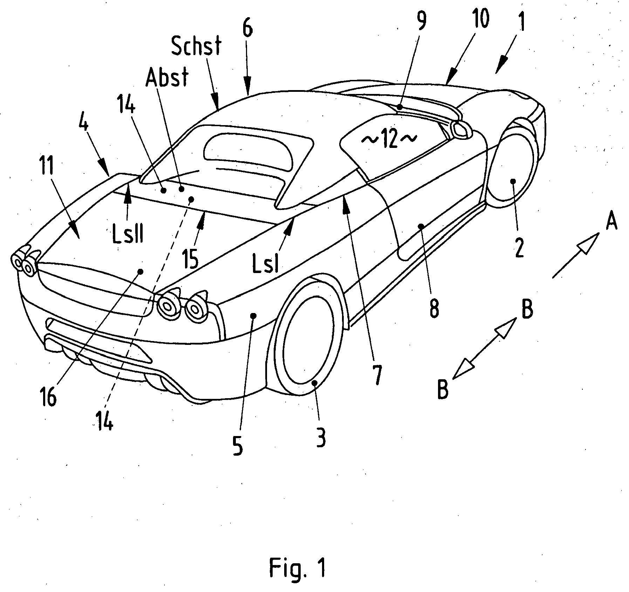

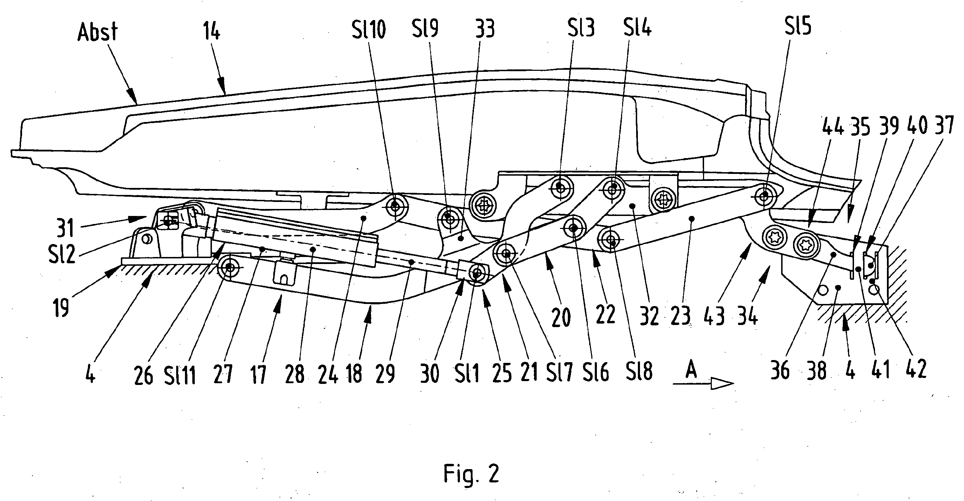

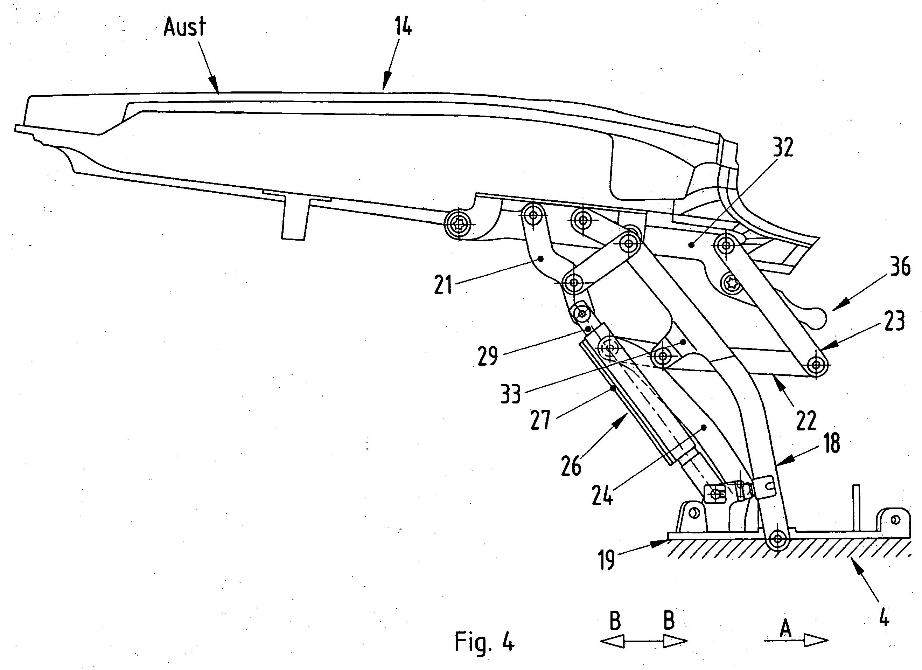

Ein Personenkraftwagen 1 umfasst einen von Rädern 2 und 3 getragenen Aufbau 4, der einen Grundkörper 5 und ein Faltverdeck 6 mit Verdeckgestänge und Verdeckbezug -beide werden nicht gezeigt- aufweist. Etwa an einer Gürtellinie 7 stößen das Faltverdeck 6 und der Grundkörper 5 zusammen, der Türen 8, eine Windschutzscheibe 9 einen Bug 10 sowie ein Heck 11 aufweist. Das Faltverdeck 6 ist zwischen einer einen Fahrgastraum 12 überspannenden Schließstellung Schst und einer in einem Verdeckkasten 13 abgelegten Offenstellung -nicht gezeigt- bewegbar. Der Verdeckkasten 13 ist Bestandteil des Aufbaus 4 und mittels eines Verdeckkastendeckels 14 verschließbar, der von einer Abdeckstellung Abst -Fig. 1 und 2- in eine Aufnahmestellung Aust -Fig. 4- und vice versa betätigbar ist. An Längsseiten Lsl und Lsll -Fig. 1- des bei 15 an einen Heckdeckel 16 angeschlossenen Verdeckkastendeckels 14 sind Lenkersysteme 17 vorgesehen, die zwischen Verdeckkastendeckel 14 und Aufbau 4 arbeiten.

Jedes Lenkersystem 17 umfasst einen Hauptlenker 18, der zum einen an einem fest mit dem Aufbau 4 verbundenen Aufbaulager 19 und zum anderen am Verdeckkastendeckel 14 schwenkbar gelagert ist. Der Hauptlenker 18 ist einerseits unter Zwischenschaltung eines Verbindungslenkers 20 mit einem am Verdeckkastendeckel 14 angelenkten Antriebslenker 21 gekoppelt. Andererseits wirkt der Hauptlenker 18 mit einem ersten Steuerlenker 22 zusammen. Der erste Steuerlenker 22 ist mit einem zweiten am Verdeckkastendeckel 14 beweglich angebrachten Steuerlenker 23 gekoppelt. Und der erste Steuerlenker 22 steht mit einem dritten Steuerlenker 24 in Wirkverbindung, der am Aufbaulager 19 schwenkbar angeordnet ist.

An einem freien Ende 25 des Antriebslenkers 21 ist ein erstes Schwenklager SI1 für eine Betätigungseinrichtung 26 vorgesehen, die pneumatischer, hydraulischer oder elektrischer Bauart sein kann. Die Betätigungseinrichtung 26 wird durch einen Stellzylinder 27 mit einem Zylindergehäuse 28 und einem Hubkolben 29 gebildet, welcher Stellzylinder 27 mit einem ersten Endbereich 30 am ersten Schwenklager SI1 und mit einem zweiten Endbereich 31 an einem zweiten Schwenklager SI2 des Aufbaulagers 19 angelenkt ist.

Der Antriebslenker 21, der Hauptlenker 18 und der zweite Steuerlenker 23 sind über ein drittes Schwenklager SI3, ein viertes Schwenklager SI4 und ein fünftes Schwenklager SI5 am Verdeckkastendeckel 14 angeordnet, wobei zur Aufnahme des dritten Schwenklagers SI3, des vierten Schwenklagers SI4 und des fünften Schwenklagers SI5 am Verdeckkastendeckel 14 ein Lagerträger 32 vorgesehen ist. Zwischen dem Verbindungslenker 20 sowie dem Hauptlenker 18 sind ein sechstes Schwenklager SI6 und besagtem Verbindungslenker 20 und dem Antriebslenker 21 ein siebtes Schwenklager SI7 wirksam. Der erste Steuerlenker 22 und der zweite Steuerlenker 23 arbeiten über ein achtes Schwenklager SI8 zusammen; der erste Steuerlenker 22 sowie der Hauptlenker 18 unter Vermittlung eines neunten Schwenklagers SI9. Darüber hinaus sind zwischen dem ersten Steuerlenker 22 und dem dritten Steuerlenker 24 ein zehntes Schwenklager SI10 und dem Hauptlenker 18 und dem Aufbaulager 19 ein elftes Schwenklager SI11 angeordnet. An dem Hauptlenker 18 ist zur Aufnahme des neunten Schwenklagers SI9 eine Lagerkorisole 33 angebracht, die aus einem Stück mit dem Hauptlenker 18 hergestellt ist.

In der Abdeckstellung Abst -Fig. 1 und 2- des Verdeckkastendeckels 14 ist eine Fixierungseinrichtung 34 wirksam, die im Ausführungsbeispiel in Fahrtrichtung A gesehen im vorderen Bereich 35 des Verdeckkastendeckels 14 angeordnet ist und zur Ausrichtung des Verdeckkastendeckels 14 relativ zum Aufbau 4 -in Y- und X- Richtung- ausgebildet ist. Die Fixierungseinrichtung 34 weist einen Fixierungsfinger 36 mit einem kreisförmigen Fixierungsfingerendstück 37 auf, das in eine korrespondierende Fixierungsaufnahme 38 eingreift. Die am Aufbau 4 befestigte plattenartige Fixierungsaufnahme 38 umfasst Durchgangsschlitze 39 und 40, die das Fixierungsfingerendstück 37 durchdringt, welches Fixierungsfingerendstück 37 quer zur Fahrzeuglängsrichtung B-B gesehen sich an aufrechten Wandabschnitten 41 und 42 abstützt. Schließlich ist der Fixierungsfinger 35 am Verdeckkastendeckel 14 vorgesehen, und zwar an einer Verlängerung 43 des Lagerträgers 32. Dabei ist der Fixierungsfinger 36 unter Zwischenschaltung einer Einstellvorrichtung 44 mit der Verlängerung 43 des Lagerträgers 32 verbunden.

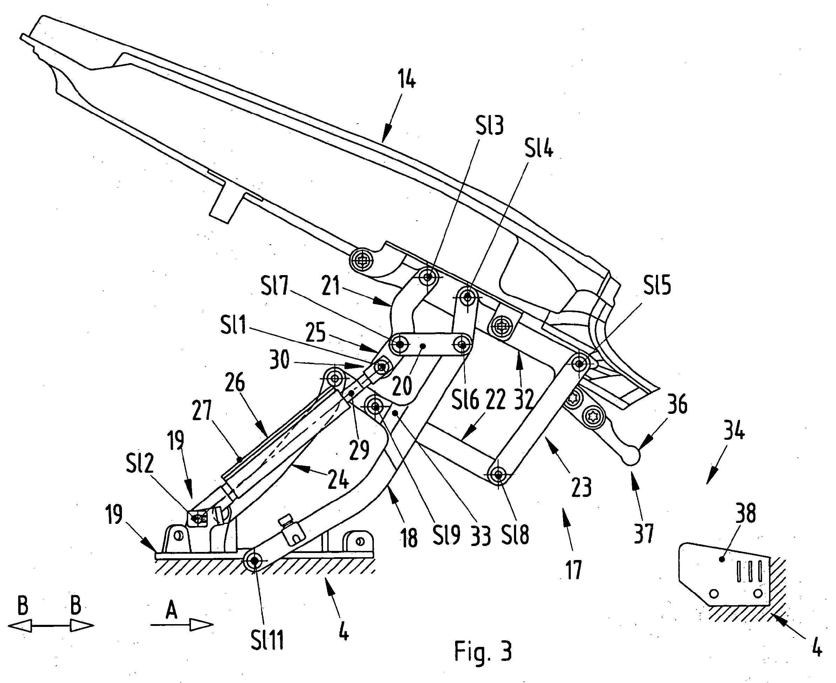

In Fig. 2 ist der Verdeckkastendeckel 14 in der Abdeckstellung Abst und das Fixierungsfingerendstück 37 im Eingriff mit der Fixierungsaufnahme 38; die Fixierungseinrichtung 34 ist in Wirkstellung. Dagegen ist die Fixierungseinrichtung 34 in Fig. 3, die eine Zwischenstellung des Verdeckkastendeckels 14 wiedergibt, ausgerückt. Sinngemäß trifft dies auch für Fig. 4 zu, in der sich der Verdeckkastendeckel 14 in der Aufnahmestellung Aust befindet.

## Patentansprüche

1. Verdeckkastendeckel für einen Personenkraftwagen mit einem Faltverdeck, das zwischen einer einen Fahrgastraum überspannenden Schließstellung und einer in einem Verdeckkasten eines Aufbaus des Personenkraftwagens abgelegten Offenstellung bewegbar ist, welcher Verdeckkastendeckel unter Vermittlung eines mehrere Lenker umfassenden und am Verdeckkastendeckel sowie Aufbau gelagerten Lenkersystems von einer Abdeckstellung in eine Aufnahmestellung verstellbar ist, **dadurch gekennzeichnet, dass** das Lenkersystem (17) einen Hauptlenker (18) umfasst, der zum einen an einem Aufbaulager (19) und zum anderen am Verdeckkastendeckel (14) schwenkbar gelagert ist, welcher Hauptlenker (18) einerseits unter Zwischenschaltung eines Verbindungslenkers (20) mit einem am Verdeckkastendeckel (14) angelenkten Antriebslenker (21) gekoppelt ist und andererseits mit einem ersten Steuerlenker (22) zusammenwirkt, der mit einem zweiten am Verdeckkastendeckel (14) beweglich angebrachten Steuerlenker (23) und einem dritten Steuerlenker (24) in Wirkverbindung steht, der am Aufbaulager (19) schwenkbar angeordnet ist.

2. Verdeckkastendeckel nach Anspruch 1, **dadurch gekennzeichnet, dass** an einem freien Ende (25) des Antriebslenkers (21) ein erstes Schwenklager (SI1) für eine Betätigungseinrichtung (26) bspw. pneumatischer, hydraulischer oder elektrischer Bauart angreift.

3. Verdeckkastendeckel nach Anspruch 2, **dadurch gekennzeichnet, dass** die Betätigungseinrichtung (26) durch einen Stellzylinder (27) gebildet wird, der mit einem ersten Endbereich (30) am ersten Schwenklager (SI1) und mit einem zweiten Endbereich (31) an einem zweiten Schwenklager (SI2) am Aufbaulager (19) angelenkt ist.

4. Verdeckkastendeckel nach einem oder mehreren der vorangehenden Ansprüche, **dadurch gekennzeichnet, dass** der Antriebslenker (21), der Hauptlenker (18) und der zweite Steuerlenker (23) über ein drittes Schwenklager (SI3), ein viertes Schwenklager (SI4) und ein fünftes Schwenklager (SI5) am Verdeckkastendeckel (14) angebracht sind.

5. Verdeckkastendeckel nach Anspruch 4, **dadurch gekennzeichnet, dass** zur Aufnahme des dritten Schwenklagers (SI3), des vierten Schwenklagers (SI4) und des fünften Schwenklagers (SI5) am Verdeckkastendeckel (14) ein Lagerträger (32) vorgesehen ist.

6. Verdeckkastendeckel nach einem oder mehreren der vorangehenden Ansprüche, **dadurch gekennzeichnet, dass** zwischen dem Verbindungslenker (20) und dem Hauptlenker (18) bzw. dem Antriebslenker (21) sechste Schwenklager (SI6) und siebte Schwenklager (SI7) eingebaut sind.

7. Verdeckkastendeckel nach einem oder mehreren der vorangehenden Ansprüche, **dadurch gekennzeichnet, dass** zwischen dem ersten Steuerlenker (22) sowie dem zweiten Steuerlenker (23) ein achtes Schwenklager (SI8) und dem zweiten Steuerlenker (23) sowie dem Hauptlenker (18) ein neuntes Schwenklager (SI9) vorgesehen sind, wobei zwischen dem ersten Steuerlenker (22) und dem dritten Steuerlenker (24) ein zehntes Schwenklager (SI10) angeordnet ist.

8. Verdeckkastendeckel nach einem oder mehreren der vorangehenden Ansprüche, **dadurch gekennzeichnet, dass** der Hauptlenker (18) mit dem Aufbaulager (19) unter Zwischenschaltung eines elften Schwenklagers (SI11) zusammenarbeitet.

9. Verdeckkastendeckel nach einem oder mehreren der vorangehenden Ansprüche, **dadurch gekennzeichnet, dass** an dem Hauptlenker (18) eine Lagerkonsole (33) zur Aufnahme des neunten Schwenklagers (SI9) angeformt ist.

10. Verdeckkastendeckel nach Anspruch 1, **dadurch gekennzeichnet, dass** in der Abdeckstellung (Abst) des Verdeckkastendeckels (14) eine Fixierungseinrichtung (34) wirksam ist.

11. Verdeckkastendeckel nach Anspruch 10, **dadurch gekennzeichnet, dass** die Fixierungseinrichtung (34) zwischen Verdeckkastendeckel (14) und Aufbau (4) vorgesehen ist.

12. Verdeckkastendeckel nach Anspruch 11, **dadurch gekennzeichnet, dass** die Fixierungseinrichtung (34) einen Fixierungsfinger (36) aufweist, der in eine korrespondierende Fixierungsaufnahme (38) eingreift.

13. Verdeckkastendeckel nach Anspruch 12, **dadurch gekennzeichnet, dass** der Fixierungsfinger (36) am Verdeckkastendeckel (18) und die Fixierungsaufnahme (38) am Aufbau (4) gehalten sind.

14. Verdeckkastendeckel nach den Ansprüchen 5 und 13, **dadurch gekennzeichnet, dass** der Fixierungsfinger (36) mit dem Lagerträger (32) des Verdeckkastendeckels (14) z.B. einstellbar verbunden ist.

## Claims

1. Roof compartment lid for a passenger motor vehicle having a folding top which is moveable between a closed position spanning a passenger compartment and an open position stored in a roof compartment of a body of the passenger motor vehicle, which roof compartment lid is adjustable from a covering position into a receiving position by means of a link system comprising a plurality of links and mounted on the roof compartment lid and body, **characterised in that** the link system (17) comprises a main link (18) which is mounted to be pivotable, on the one hand on a body bearing (19), and on the other hand on the roof compartment lid (14), which main link (18) on the one side is coupled with a drive link (21) hinged on the roof compartment lid (14) with interposition of a connection link (20), and on the other side interacts with a first control link (22) which is operatively connected to a second control link (23) attached moveably to the roof compartment lid (14) and to a third control link (24) which is arranged to be pivotable on the body bearing (19).

2. Roof compartment lid according to claim 1, **characterised in that** a first pivot bearing (SI1) for an actuating device (26), for example of a pneumatic, hydraulic or electrical design, engages with a free end (25) of the drive link (21).

3. Roof compartment lid according to claim 2, **characterised in that** the actuating device (26) is formed by a positioning cylinder (27) which is hinged on the body bearing (19) with a first end region (30) on the first pivot bearing (SI1) and with a second end region (31) on a second pivot bearing (SI2).

4. Roof compartment lid according to one or more of the preceding claims, **characterised in that** the drive link (21), the main link (18) and the second control link (23) are attached to the roof compartment lid (14) via a third pivot bearing (SI3), a fourth pivot bearing (SI4) and a fifth pivot bearing (SI5).

5. Roof compartment lid according to claim 4, **characterised in that** a bearing pedestal (32) is provided on the roof compartment lid (14) to receive the third pivot bearing (SI3), the fourth pivot bearing (SI4) and the fifth pivot bearing (SI5).

6. Roof compartment lid according to one or more of the preceding claims, **characterised in that** sixth pivot bearings (SI6) and seventh pivot bearings (SI7) are installed between the connection link (20) and the main link (18) or the drive link (21).

7. Roof compartment lid according to one or more of the preceding claims, **characterised in that** an eighth pivot bearing (SI8) is provided between the first control link (22) and the second control link (23) and a ninth pivot bearing (SI9) is provided between the second control link (23) and the main link (18), wherein a tenth pivot bearing (SI10) is arranged between the first control link (22) and the third control link (24).

8. Roof compartment lid according to one or more of the preceding claims, **characterised in that** the main link (18) works together with the body bearing (19) with interposition of an eleventh pivot bearing (SI11).

9. Roof compartment lid according to one or more of the preceding claims, **characterised in that** a bearing bracket (33) to receive the ninth pivot bearing (SI9) is formed on the main link (18).

10. Roof compartment lid according to claim 1, **characterised in that** a fixing device (34) is operative in the covering position (Abst) of the roof compartment lid (14).

11. Roof compartment lid according to claim 10, **characterised in that** the fixing device (34) is provided between the roof compartment lid (14) and the body (4).

12. Roof compartment lid according to claim 11, **characterised in that** the fixing device (34) has a fixing finger (36) which engages with a corresponding fixing receiver (38).

13. Roof compartment lid according to claim 12, **characterised in that** the fixing finger (36) is held on the roof compartment lid (18) and the fixing receiver (38) is held on the body (4).

14. Roof compartment lid according to claims 5 and 13, **characterised in that** the fixing finger (36) is connected to the bearing pedestal (32) of the roof compartment lid (14), for example to be adjustable.

## Revendications

1. Capot de coffre de couverture de toit pour une voiture de tourisme à toit repliable qui est déplaçable entre une position de fermeture dans laquelle il s'étend au-dessus de l'habitacle et une position d'ouverture dans laquelle il vient se ranger dans un coffre de couverture de toit d'une carrosserie d'une voiture de tourisme, ce capot de coffre de couverture de toit étant monté au moyen d'un système de leviers comportant plusieurs biellettes sur le capot de coffre de couverture de toit ainsi que sur la carrosserie pour être mis d'une position de rangement dans une position de sortie, **caractérisé en ce que** le système de leviers (17) comporte un levier principal (18) qui est monté pivotant d'un côté sur un palier de bâti (19) et de l'autre côté sur le capot de coffre de couverture de toit (14), le levier principal (18) étant d'une part couplé par l'intermédiaire d'une biellette de liaison (20) à un levier de manoeuvre (21) monté pivotant sur le capot de coffre de couverture de toit (14) et coopérant d'autre part avec un premier levier de commande (22), qui est en liaison d'actionnement avec un deuxième levier de commande (23) rapporté mobile sur le capot de coffre de couverture de toit (14) et avec un troisième levier de commande (24) qui est monté pivotant sur le palier de bâti (19).

2. Couverture de capot de toit selon la revendication 1 **caractérisée en ce qu'**à l'une des extrémités libres (25) du levier de manoeuvre (21), un premier palier de pivotement (SI1) pour un dispositif d'actionnement (26) du type pneumatique, hydraulique ou électrique vient en prise.

3. Capot de coffre de couverture de toit selon la revendication 2 **caractérisé en ce que** le dispositif d'actionnement (26) est réalisé sous la forme d'un vérin de position (27) qui est articulé à pivotement sur le premier palier de pivotement (SI1) par une première zone d'extrémité (30) et articulé à pivotement sur un deuxième palier de pivotement (SI2) sur le palier de bâti (19) par une deuxième zone d'extrémité (31).

4. Capot de coffre de couverture de toit selon l'une ou plusieurs des revendications précédentes **caractérisé en ce que** le levier de manoeuvre (21), le levier principal (18) et le deuxième levier de commande (23), sont rapportés sur le capot de coffre de couverture de toit (14), à travers un troisième palier de pivotement (SI3), un quatrième palier de pivotement (SI4), et un cinquième palier de pivotement (SI5).

5. Capot de coffre de couverture de toit selon la revendication 4 **caractérisé en ce que** pour recevoir sur le capot de coffre de couverture de toit (14), le troisième palier de pivotement (SI3), le quatrième palier de pivotement (SI4) et le cinquième palier de pivotement (SI5), il est prévu un support porte-palier (32).

6. Capot de coffre de couverture de toit selon l'une ou plusieurs des revendications précédentes **caractérisé en ce qu'**entre la biellette de liaison (20) et le levier principal (18) sont respectivement intégrés le sixième palier de pivotement (SI6) et le septième palier de pivotement (SI7) du levier de manoeuvre (21).

7. Capot de coffre de couverture de toit selon l'une ou plusieurs des revendications précédentes **caractérisé en ce qu'**entre le premier levier de commande (22) ainsi que le deuxième levier de commande (23) un huitième palier de pivotement (SI8) est prévu et qu'entre le deuxième levier de commande (23) ainsi que le levier principal (18) un neuvième palier de pivotement (SI9) est prévu et **en ce qu'**entre le premier levier de commande (22) et le troisième levier de commande (24) un dixième palier de pivotement (SI10) est intégré.

8. Capot de coffre de couverture de toit selon l'une ou plusieurs des revendications précédentes **caractérisé en ce que** le levier principal (18) coopère avec le palier de bâti (19) par l'intermédiaire d'un onzième palier de pivotement (SI11).

9. Capot de coffre de couverture de toit selon l'une ou plusieurs des revendications précédentes **caractérisé en ce que** le levier principal (18) est conformé en console-support (33) pour recevoir le neuvième palier de pivotement (SI9).

10. Capot de coffre de couverture de toit selon la revendication 1 **caractérisé en ce que** dans la position de couverture (Abst) de la couverture de toit (14) un dispositif de verrouillage (34) est actif.

11. Capot de coffre de couverture de toit selon la revendication 10 **caractérisé en ce que** le dispositif de verrouillage (34) est prévu entre le capot de couverture de toit (14) et le bâti (4).

12. Capot de coffre de couverture de toit selon la revendication 11 **caractérisé en ce que** le dispositif de verrouillage (34) présente un doigt de verrouillage (36) qui vient en prise dans une serrure de verrouillage (38).

13. Capot de coffre de couverture de toit selon la revendication 12 **caractérisé en ce que** le doigt de verrouillage (36) est fixé au capot de coffre de la couverture de toit (18) et la serrure de verrouillage (38) est fixée au bâti (4).

14. Capot de coffre de couverture de toit selon les revendications 5 et 13 **caractérisé en ce que** le doigt de verrouillage (36) est relié par exemple de façon réglable au support porte-palier (32) du capot de coffre de la couverture de toit (14).
